# EUROPEAN PATENT SPECIFICATION

(11) **EP 1 893 512 B1**
(45) Date of publication and mention of the grant of the patent: **04.03.2009**
(21) Application number: 06701598.2
(22) Date of filing: 18.01.2006
(51) Int. Cl.: B65G 59/02, B65G 61/00

(54) **AUTOMATIC DEPALLETIZER**
AUTOMATISCHER ENTPALETTIERER
DEPALETTISEUR AUTOMATIQUE

(30) Priority: 05.05.2005 IT CR20050006
(43) Date of publication of application: 05.03.2008
(73) Proprietor: Arisi S.R.L., 46010 Commessaggio MN (IT)
(72) Inventor: LODI RIZZINI, Morris, 46018 Sabbioneta (MN) - Fraz. Breda Cisoni (IT)
(74) Representative: Marcio', Paola
(86) International application number: PCT/IT2006/000029
(87) International publication number: WO 2006/117814

(56) References cited:
- US-A- 3 669 283
- US-A- 6 022 187

## Description

The present invention relates to an automatic depalletizer for unloading palletized blocks of material. More in detail, the invention relates to a depalletizer that is particularly suitable for unloading palletized blocks of raw rubber for industrial use.

Depalletization is a very common task in the field of material handling, essentially consisting in unloading single objects from a pallet to send them to a subsequent processing step.

Different ways are known to perform this task, from manual handling to use of automatic depalletizing machines or robots. Such machines substantially work with an arm adapted to pick up the palletized objects, and transfer them to the outlet of the machine, typically on a conveyor belt; the arm is controlled by a more or less complex program (software).

Most common machines normally follow preset programs, so that the pickup member is always guided in the same positions, according to a preset sequence. As a matter of fact, such machines require the palletized objects to be all the same, and positioned and aligned in an orderly manner, otherwise they cannot carry out their task.

More complex applications exist, wherein the machine is required to recognise the shape or the presence of the objects too. Genuine proper robots are developed in such cases, providing complex sensor systems and image recognition algorithms.

US 6022187 discloses a depalletizing machine that takes individual stacks of blanks for cigarette packets from a pallet and feeds them for further processing to a conveyor. Said machine includes full three dimensional movability of a pickup arm, a pivotal pickup head, an optical sensor and an electronic control system.

The invention is particularly directed to the application of unloading pallets of blocks of rubber.

Rubber for industrial processes of melting, moulding, etc..., is available in the form of blocks or "batches" of about 20-30 kg each. These blocks are generally palletized in a quite irregular manner, for some reasons including: the shape of the blocks is approximately parallelepipedon but still irregular, as the material is intended for cutting or melting; the blocks are still hot when they are stacked, so that they buckle bending the stacks in one direction or the other; the pallets have non-standard sizes, as they come from different regions of the world.

Another problem is that different grades of rubber are normally used, so that dimensions, hardness and weight of the blocks may change from one material to another. Obviously, an automatic depalletizing machine should be able to cope with this variability of the material.

For the above reasons, machines with preset standard programs are not suitable for unloading pallets of rubber. On the other hand, the solution of a robot with a very complex sensor part would be too expensive, especially for medium or medium to small applications, taking into account that the purpose is to handle raw and relatively low-cost blocks of material, still to be processed.

The consequence is that manual handling is still used, with people charged of picking up the blocks from the pallet and placing them on a conveyor belt. The drawbacks of manual handling are well known, and can be summarised as inevitably high costs, as labour is required; safety risks depending on the weight of the blocks; downstream productive cycle slown down.

The object of the invention is to provide a solution to the problem, overcoming the disadvantages of the prior art.

The object, more in particular, is to provide an automatic depalletizer suitable for moving blocks of material, particularly rubber, adapted to work in a completely automatic mode on irregular pallets, also comprising blocks with non-uniform shape and/or dimensions.

A further object is a depalletizer adapted to cope with blocks of different material, in particular of different consistency and hardness. With reference to the rubber blocks, an object of the invention is a depalletizer adapted to manage blocks made of soft or hard rubber, particularly in the range 30 - 80 Shore.

Another purpose of the invention is a reasonable complexity and cost of the machine, taking into account the field of application.

These objects are achieved by the depalletizing machine of claim 1.

Preferred aspects of the invention are claimed in the remaining claims 2 to 10.

The above-mentioned purposes are achieved by the invention, substantially enabling to unload pallets in a completely automatic manner, even when the pallets are not uniform in terms of dimensions, shape and arrangement of the blocks of material the machine can work as well with blocks of different hardness, thanks to the particular management of the grasping tools.

The purposes are achieved with reasonable costs and complexity, in particular by using only a single distance laser sensor, that provides both the digital output of the presence of material on the pallet, and the analogue output correlated to the distance between the head and the blocks. This makes possible to scan the pallets, search for material and move the head to the correct place for the grasping manoeuvre.

The machine is particularly adapted to work with palletized blocks of rubber, for the above explained reasons.

The invention is now disclosed with reference to a preferred embodiment, shown by way of non-limitative example, with the help of the figures, in which:
Fig. 1 is a side view of a depalletizing machine, or depalletizer, according to the invention;
Fig. 2 is a plan view of the machine of Fig. 1;
Fig. 3 is a front view of the main components of the pickup head of the machine of Fig. 1;
Fig. 4 is a schematical plan view of the head of Fig. 3, showing the arrangement of the main parts, and
Figs 5 - 8 refer to a block diagram of the machine's operating logic.

With reference to the figures, a depalletizing machine (or depalletizer) is shown, with a motion unit 1, a pickup head 2 and a belt conveyor 3 as basic parts. The machine comprises a loading station 4, that corresponds to an area intended to receive palletized blocks of raw material, and an unloading station 5, where each single block can be released onto the conveyor 3.

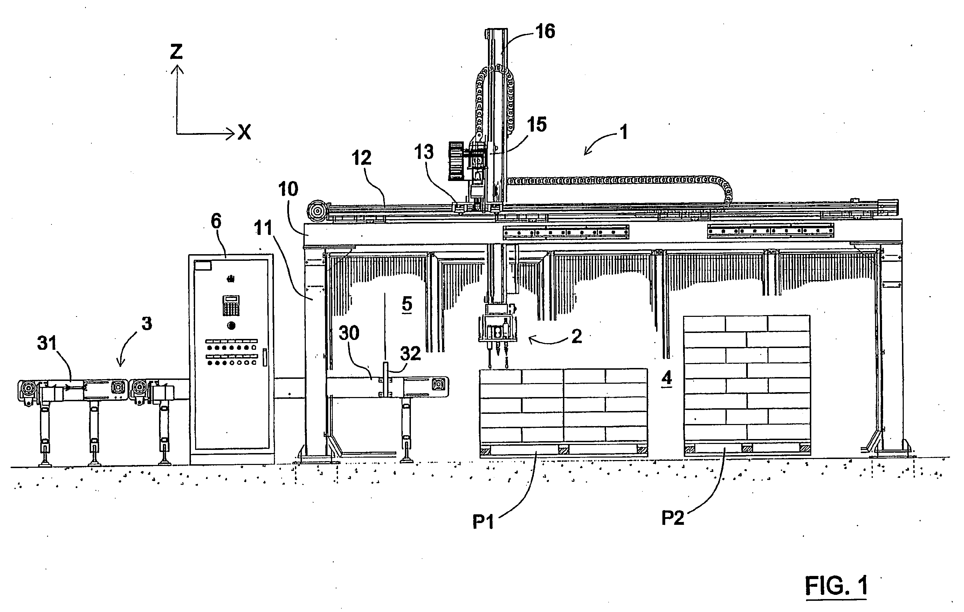

Fig. 1 shows two pallets of material in the loading station 4, in particular formed by blocks (or balls) of rubber; the pallets are shown as P1 and P2.

The machine also comprises a control panel 6 housing an electronic board, storing a program for operation in automatic mode.

The motion system 1 consist of a cartesian robot with 3+1 degrees of freedom for the pickup head 2. It gives the head 2 a free linear movement on the three axes X, Y and Z respectively longitudinal, transverse and vertical (as shown); it is furthermore able to rotate the head 2 around the vertical axis Z.

Said motion system 1, in greater detail, has an overhead-crane structure with longitudinal beams 10 and uprights 11. The beams 10 carry X-oriented linear guides 12.

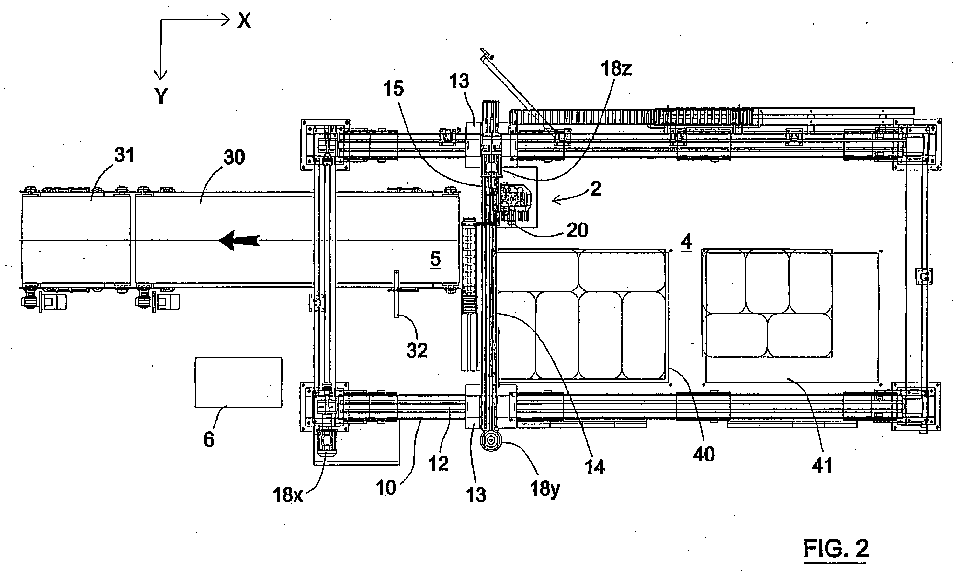

The overhead-crane structure comprises a movable crosspiece, consisting of an Y-oriented linear guide 14 mounted on sliding shoes 13 (Fig. 2); a motor-driven carriage 15 is running on said linear guide 14 and supports a third, vertically-oriented linear guide 16, which is sliding in the vertical direction with respect to said carriage 15.

The movement of the carriage 15 and the vertical guide 16 according to the X, Y and Z axes is substantially obtained with drive belt wheeled runners, following the aforesaid guides.

The motors are epicyclic coaxial reduction gears, coupled with three-phase asynchronous motors; the X, Y and Z motors are shown in Fig. 2 respectively as 18x, 18y and 18z. The motor 18x is mounted on the overhead-crane structure; the motor 18y is mounted on the guide 14 and the motor 18z on the carriage 15. These linear motion systems pertain to known technique, and thus they will not be further described:

The head 2 is mounted on the lower end of the vertical guide 16, coupled to a pneumatic actuator 17 enabling 90-degree rotation of said head 2 around the Z axis.

The head 2 comprises an optical sensor 20, mounted in a central and frontal position, and three helicoidal-tip tools 21, mounted on a lower face of the head 2.

The optical sensor 20 has a digital output and an analogue output; said sensor then provides a digital signal, stating the presence of material in front of the head and enabling to scan the pallets, and an analogue signal proportional to the distance on the Y axis between a block and the head. The analogue signal is used for positioning the head right above the blocks, as will be explained below. The sensor 20 is preferably an infrared laser sensor.

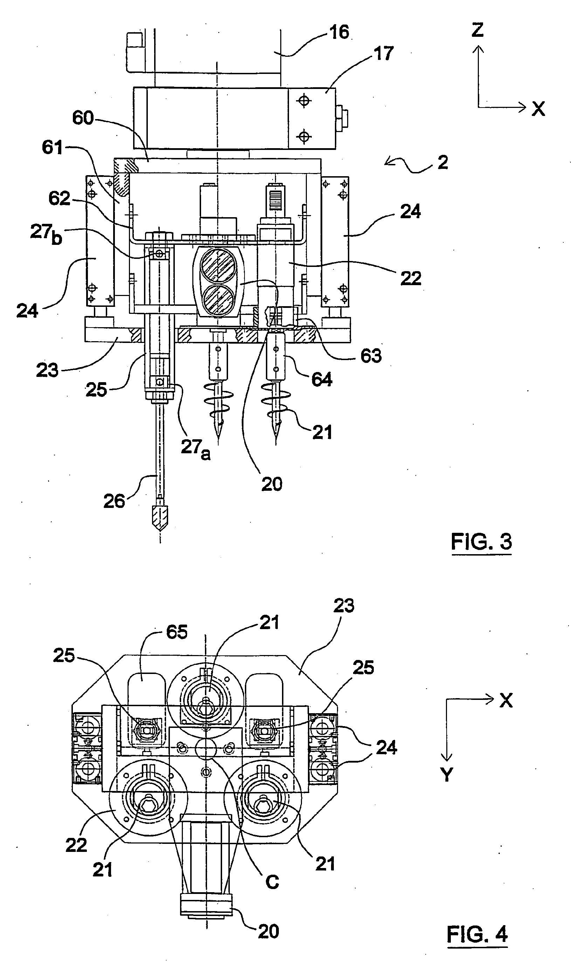

The tools 21 are arranged, in a preferred embodiment, at the tops of a triangle, as illustrated in Fig. 4.

Each tool 21 is operated by a reversible pneumatic motor 22.

The unit formed by tools 21 and motors 22 is mounted on a moving plate 23; said moving plate 23 can be extended and retracted in the vertical direction, by dual-effect pneumatic actuators 24.

The head 2 also comprises two pneumatic cylinders 25, each fitted with a rod 26 extending downwards below the plate 23, and acting as a probe and position transducer. Each cylinder 25 is equipped with two magnetic proximity sensors 27a and 27b, mounted at different heights to provide a sequence of two outputs when rod 26 is moving. Said two signals can be used for slowing down and stopping the head 2. Two probe cylinders 25 are provided, one for each side, arranged as in Fig. 4.

The frame structure of the head is substantially a box structure formed by bolted aluminium alloy plates. More in detail, the structure of the head consists essentially of a plate 60 fixed to the shaft of the pneumatic motor 17, and two side plates 61 supporting a central bracket 62. A protective guard (not shown) can be mounted.

The actuators 24 are fixed to the side plates 61; the pneumatic cylinders 25 and the sensor 20 are fixed to the bracket 62. The pneumatic motors 22 are fixed to the moving plate 23 by suitable clamping collars 63; the drills 21 are locked on the shafts of the motors 22 by means of a sleeve 64, having one end fixed to the motor shaft by a key, and the other end supporting the tip 21 inserted and locked by a bolt acting as a plug. The plate 23 has an octagonal shape, with two passing slots 65 (Fig. 4) corresponding to the probe cylinders 25.

The motors and pneumatic cylinders are controlled by a pneumatic circuit with solenoid valves that open and close the compressed-air supply using prior-art techniques. The components of the pneumatic circuit are not shown.

In the example, the belt conveyor 3 has a first belt 30, about three metres long, and a second belt 31 about 1 metre long and acting as a magazine. The conveyors are provided with a smooth PVC belt and the respective drive rollers are rotated by screw-feed motor-driven reduction gears.

A photoelectric cell sensor 32 is positioned at the starting point of the belt 30, with upwards orientation.

The loading station 4 comprises two substations, made in particular by two steel bases 40 and 41. These bases constitute a reference for positioning the pallets loaded with blocks of material, to allow a precise execution of the machine's working program.

The unloading station 5 corresponds to the portion of space above the end of the belt 30, where the sensor 32 is also located.

The machine is also provided with suitable safety guards, both passive to prevent access to the zones in which the moving members operate, and active, to stop the machine in case of an emergency. These guards may, for example, include welded mesh panels around the moving zone of the pickup head 2; an access gate with microswitch that stops the machine if the gate is opened whilst the machine is running; a photoelectric safety barrier at the front pallet-loading side.

The control panel 6 controls the position of the axes, operation of grasping means and movement of the conveyors. The user interface consists of a switch panel through which commands can be given to the machine, and a display showing operating parameters, and can also be used for manual operation mode.

In particular, the control panel 6 houses the electronic control system that provides automatic operation of the machine. The automatic wotking program substantially carries out the steps of scanning the pallet by means of the sensor 20 mounted on the head 2 and progressively unloading the pallets from top to bottom, by horizontal rows.

More in particular, the blocks are transferred with the following steps:
a) the pickup head 2 is positioned with the front part aligned with one block of material;
b) the linear distance between the pickup head 2 and said block is measured by means of the same sensor 20;
c) the pickup head 2 is raised and positioned directly above the block;
d) the head 2 is lowered and the block is grasped, by drills 21 penetrating through the material of the block itself.

The control of motors 22 provides a double stop condition, that is i) limit switch reached by movable plane 23 or ii) operating timeout (e.g. 2.5 s) reached. This double stop condition enables a secure pickup of both soft and hard materials: in case of a soft block, the drills 21 can easily penetrate through the block itself and motors are stopped by the plate 23 reaching the limit switch; with a hard material, the action of drills 21 is more difficult and the stop occurs because of timeout. Further insistence with action of the drills 21, in fact, would be a loss of time and may even be harmful.

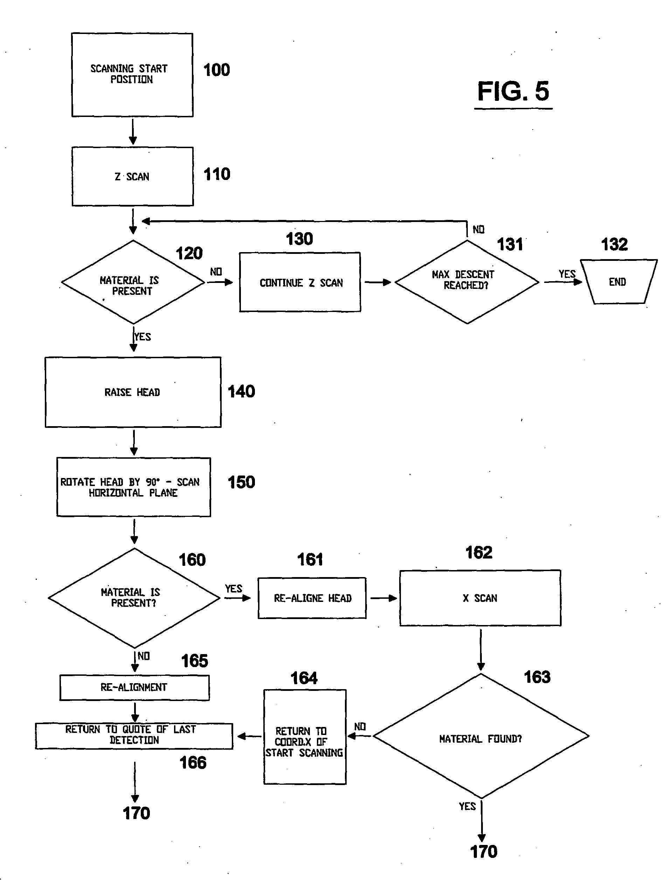

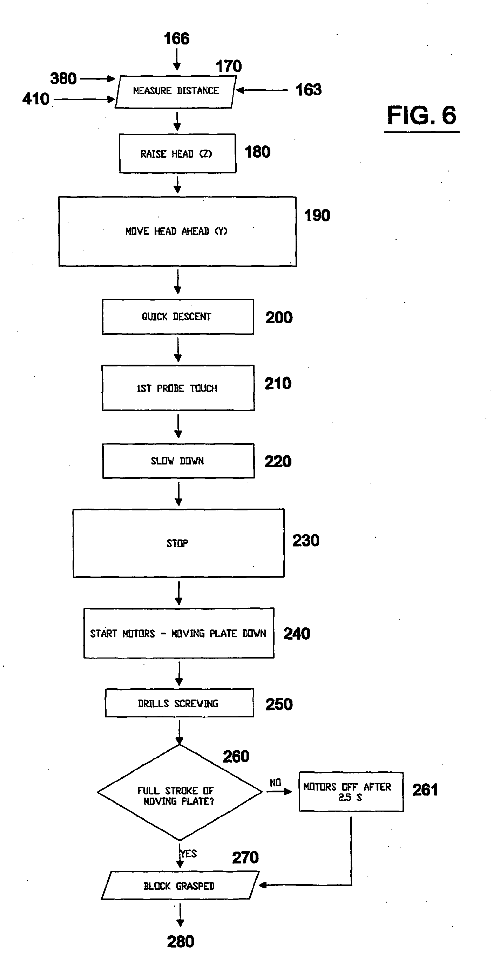

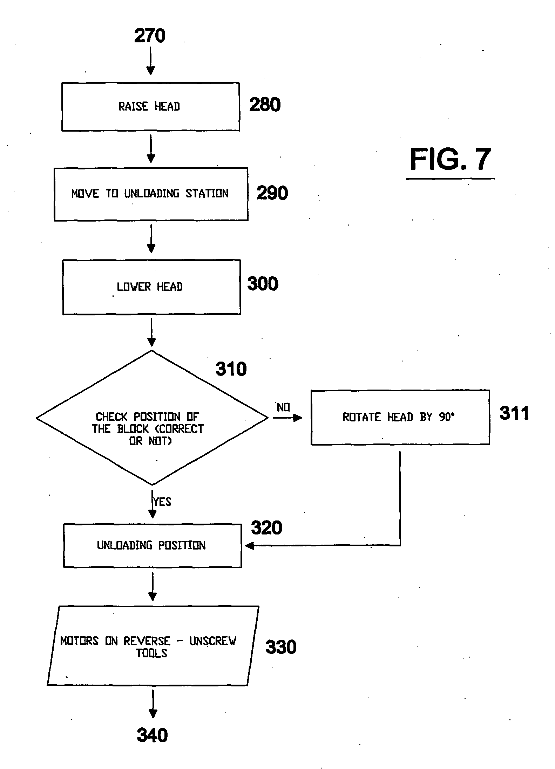

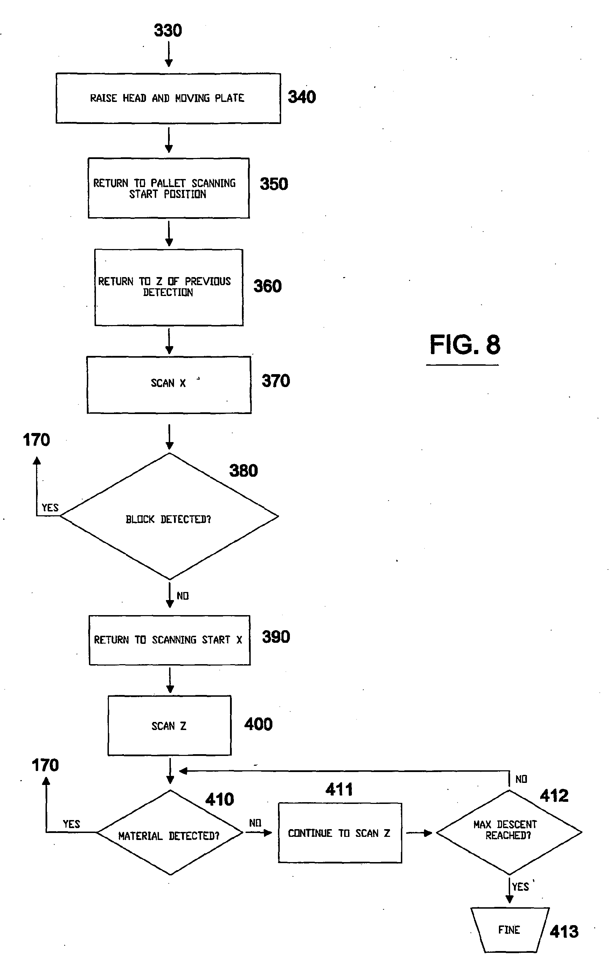

The logic of the working program, in a preferred embodiment, is shown in greater detail by block diagram of Figs. 5 to 8.
Step 100: motion system 1 quickly takes the pickup head 2 to a scanning start position. This scanning start position is in front of the pallet, leaving a free path (corridor) for the head 2 along the X-direction, for the purposes of scanning.
Step 110: the guide 16 descends slowly downwards, taking the head 2 towards the pallet.
Step 120: the laser sensor 20 provides the digital output "yes/no" indicating whether there is some material in front of the pickup head 2 or not; in order to avoid false readings, the digital response is preferably adjusted to exclude reports above a given threshold distance (greater than the depth of the pallet).
Steps 130 to 132: in the event of a negative signal, the head 2 continues to descend slowly along the Z axis (step 130), seeking for bottom blocks of material. If the head reaches a maximum descent position (step 131) the system considers that the pallet has been completely unloaded (step 132).
Step 140: the head 2 is raised for a distance equivalent to the average height of one of the blocks of material. As an example, for balls of rubber this height is typically 160 mm.
Steps 150 - 160: the machines rotates the head 2 by 90°, by means of the motor 17. This rotation enables the sensor 20 to perform complete scanning of the horizontal plane in the area where the pallet is located. The machine can in this way locate blocks of material that are not aligned in front of the head: it can typically be the case of an isolated block above the others, or a partially unloaded pallet.
Steps 161 to 165: this sequence is followed if the previous horizontal plane scan gives a positive result: the pickup head 2 is rotated in the opposite direction by 90°, realigning the sensor 20 with Y (step 161); it is then slowly moved along X, performing horizontal scanning (step 162). The machine seeks material along a continuous length that is the equivalent of half of the average width of a block, in order to avoid false reports.

At this point, the machine has selected the next block to unload, which may be the block detected with the first vertical scan, or the first block detected with the next horizontal scan.
Step 170: the pickup head 2 is moved in front of the selected block of material. The system acquires the distance of the block from the head (according to Y) by means of the analogue output provided by the sensor 20.
Step 180: the head 2 is quickly raised by a preset safety height, that is sufficient to pass over the pallet. In normal applications, this height may be approximately 700 mm.
Step 190: the head 2 is moved along Y, for a distance corresponding to the sum of three amounts: the distance between the head and the block, measured by the sensor 20, plus the distance between the "zero" point of the sensor and the centre C (Fig. 4) of the pickup head, plus half the average width of the blocks on which the machine is working. In this way, the pickup members 21 is moved correctly above the central portion of the selected block.
Step 200: the pickup head 2 is quickly lowered towards the block.
Step 210: one or both rods 26 of the probe cylinders 25 touch the block. As soon as the piston of one of the cylinders reaches the first, lower proximity sensor, said sensor gives a first signal to the system causing the head 2 to slow down.
Step 220: after the above slow-down signal has been received, the system commands slow descent of the pickup head 2, slowing down the motor 18z of the guide 16.
Step 230: the piston of one of the cylinders 25, normally the same one that supplied the slow-down signal, reaches the second, higher sensor, thus providing the stop signal. At this point, the head 2 is in the grasping position, just above the block.
Step 240: the same stop signal is also used to start operation of the grasping members. Referring to the shown embodiment, the stop signal gives consent to operate the motors 22 and the pneumatic cylinders 24, lowering the plate 23 towards the block.
Step 250: the drills 21 are screwed into the material, realizing the grasping function. Normally, when the block is aligned with axes X and Y, all the drills can penetrate through the block, thanks to the head positioning procedure disclosed above. The triangular arrangement of the tips 21 nevertheless ensures that at least one or two of them can grasp the block, even if it is not aligned with X and Y axes.
Steps 260 - 270: the system checks whether the full stroke of the cylinders 24 has been reached; in the meantime, the time elapsed from start of the grasping means, i.e. the motors 22, is checked. The motors 22 are stopped when one of these two conditions (full stroke or timeout) is reached.
Steps 280 - 300: the selected block has now been grasped; the head 2 is quickly moved to the unloading station 5; the guide 16 is lowered to take the block close to the belt 30.
Steps 310 - 311: the sensor 32 enables the machine to check whether the position of the block is right. If the position is not as desired, a 90° rotation of the head 2 is imparted by means of the pneumatic motor 17. The blocks are normally parallelpipedons with a long side and a short side, and the right unloading position is that with the long side parallel to the X axis, that is parallel to the belt 30. In case the long side of the block is parallel to Y axis, the cell 32 is covered and the resulting signal is used to operate the motor 17 accordingly.
Step 320: the head 2 continues its descent to the belt 30, until it reaches the unloading position.
Step 330: the block of material is released from the head 2. The motors 22 are driven with inverted rotation, to unscrew the drills 21 from the material. In this step, the moving plate 23 is in "neutral", i.e. the corresponding air solenoid valve are open.
Steps 340 - 360: after releasing the block, the head 2 is raised and the plate 23 reascends. The head 2 is returned to the pallet scanning start position and to the material pickup height in the cycle that has just concluded.
Steps 370 - 380: an X-scan is perfomed by the head 2, searching for other blocks of material. In the positive case, the cycle is repeated from step 170. In the negative, the machine goes to following step 390.
Steps 390: The head 2 is taken back to the scanning start X-coordinate, through the guide 14.
Steps 400 and 410 to 413: A vertical Z-scan is made by the head 2. If blocks are found, the system returns to step 170, in practice unloading one layer below. If blocks are not found, the guide 16 continues to descend along Z until some material is found; when the bottom Z position is reached, the pallet has been fully unloaded (step 413).

## Claims

1. Depalletizing machine for palletized blocks of raw material, particularly rubber, said machine comprising a loading station (4) adapted to receive pallets (P1, P2) and an unloading station (5) adapted to receive single depalletized blocks, wherein:
- the machine comprises a pickup head (2) coupled to a motion system (1) acting on three cartesian axes longitudinal (X), transverse (Y) and vertical (Z), with rotation around the vertical axis (Z), for moving said pickup head (2) between the loading station (4) and the unloading station (5);
- the pickup head (2) is provided with at least an optical sensor (20), suitable for detecting the presence of a block of material in front of said head (2) and measuring the distance between the head (2) and the block, and is further provided with grasping means (21) for grasping said blocks of material;
- the machine comprises an electronic control system with an automatic working program, wherein the running of said program causes the machine to scan a pallet located in the loading station (4) moving the pickup head (2) in front of the pallet and detecting the arrangement of the blocks by means of said optical sensor (20), and to proceed with grasping and conveying said blocks to the unloading station (5) by means of said pickup head (2),
said motion system (1) having an overhead-crane structure,
**characterised in that** said overhead-crane structure comprises fixed longitudinal beams (10) provided with horizontal guides (13) for a transverse linear guide (14); a carriage (15) that is slideable on said linear guide (14); a vertical linear guide (16), associated to said carriage (15) and movable in the vertical direction with respect to the same.

2. Machine according to claim 1, **characterised in that** the pickup head (2) is mounted on the lower end of the vertical guide (16), coupled with a pneumatic actuator (17) eanbling rotation around the vertical axis (Z).

3. Machine according to any preceding claim, **characterised in that** said sensor (20) is a laser sensor with double digital and analogue output.

4. Machine according to any preceding claim, **characterised in that** the grasping means of the head (2) comprise rotating tips (21) adapted to penetrate into the material of the blocks.

5. Machine according to any preceding claim, **characterised in that** the pickup head (2) has a box structure, with a front part where said optic sensor (20) is mounted, and a lower face where the grasping means (21) are mounted, said
pickup head (2) comprising three rotating tips (21) arranged at the tops of a triangle, on the lower face of said head (2).

6. Machine according to claim 5 **characterised in that** the pickup head (2) comprises position transducers (25, 26) extending from the lower face, to detect the vertical approach to a block of material to be picked, said
grasping means (21) and transducers (25) being mounted on a plate (23), said plate (23) being movable vertically with respect to the structure of the head (2), by means of linear actuators (24), said
transducers (25) consisting of two pneumatic cylinders; a first proximity sensor (27a) and a second proximity sensor (27b) are mounted on each pneumatic cylinder; the second proximity sensor is located at a greater height than the first; output of the first sensor (27a) is used as a slow-down signal for the head (2), and the output of the second sensor (27b) as a stop signal.

7. Machine according to any preceding claim, **characterised in that** it comprises a further photocell sensor (32) with vertical range, located at said unloading station (5); said sensor (32) provides a signal to detect the orientation in relation to the longitudinal and transverse (X, Y) axes of the block grasped by the pickup head (2); the control system uses said signal to rotate, if necessary, the pickup head (2) around the vertical axis (Z) before commanding the release of the grasping means.

8. Machine according to any preceding claim, **characterised in that** the running of said program provides the machine to detect the maximum height of the blocks on the pallet, and to progressively unload the blocks by horizontal rows, according to the longitudinal axis (X), starting from the maximum height and going progressively to lower heights,
the running of said program providing the machine to follow, for grasping each single block of material, the steps of:
a) positioning the pickup head (2) aligned on the block of material, by means of the detection of the optic sensor (20);
b) measuring the linear distance between the pickup head (2) and said block by means of the same sensor (20);
c) raising the pickup head (2) and positioning said head (2) directly above the block;
d) lowering the head (2) and grasping the block, by means of said grasping means (21).

9. Machine according to claim 8, **characterised in that** the block is picked by the grasping means (21) penetrating the material of the block.

10. Machine according to claim 9, **characterised in that** said automatic program provides that, when grasping a block, operating time and penetration depth of of the grasping means (21) into the material of said block are simultaneously checked to command the stop of the grasping means (21).

## Patentansprüche

1. Depalettiermaschine für Rohmaterialblöcke auf Paletten, insbesondere Gummi, wobei genannte Maschine aus einer für den Empfang der Paletten (P1, P2) geeigneten Ladestation (4) und einer für den Empfang von einzelnen depalettierten Blöcken geeigneten Abladestation (5) besteht, in der
- die Maschine einen an ein Bewegungssystem (1) angekoppelten Bearbeitungskopf (2) umfasst, der auf drei kartesischen Achsen längs (X), quer (Y) und vertikal (Z) wirkt, mit Drehung zwischen der vertikalen Achse (Z) zum Bewegen des genannten Bearbeitungskopfes (2) zwischen der Ladestation (4) und der Abladestation (5);
- der Bearbeitungskopf (2) mit mindestens einem optischen Sensor (20) ausgestattet ist, geeignet zum Ermitteln des Vorhandenseins eines Materialblocks gegenüber genannten Kopfes (2) und zum Messen der Entfernung zwischen dem Kopf (2) und dem Block sowie ferner mit Greifmitteln (21) zum Ergreifen der genannten Materialblöcke ausgerüstet ist;
- die Maschine ein elektronisches Kontrollsystem mit einem automatischen Arbeitsprogramm umfasst, worin der Ablauf des genannten Programms bewirkt, dass die Maschine eine in der Ladestation (4) befindliche Palette durch Bewegen des Bearbeitungskopfes (2) gegenüber der Palette und Ermitteln der Anordnung der Blöcke mittels des genannten optischen Sensors (20) einscannt und dass das Ergreifen und Fördern der genannten Blöcke zur Abladestation (5) mittels des genannten Bearbeitungskopfes (2) ausgeführt wird;
- das genanntes Bewegungssystem (1) eine Hängekranstruktur aufweist, **dadurch gekennzeichnet, dass** genannte Hängekranstruktur fixe Längsprofilträger (10) umfasst, die mit waagerechten Führungen (13) für eine quer verlaufende Linearführung (14) ausgestattet sind; ein Fahrwerk (15), das auf genannter Linearführung (14) verschiebbar ist; eine senkrechte Linearführung (16), die mit genanntem Fahrwerk (15) verbunden und in senkrechte Richtung zu diesem bewegbar ist.

2. Maschine nach Anspruch 1, **dadurch gekennzeichnet, dass** der Bearbeitungskopf (2) am unteren Ende der senkrechten Führung (16) gelagert ist, angekoppelt an einen Druckluft-Betätigungszylinder (17), der die Drehung um die vertikale Achse (Z) aktiviert.

3. Maschine nach einem der vorangehenden Ansprüche, **dadurch gekennzeichnet, dass** genannter Sensor (20) ein Lasersensor mit doppelter Digital-/Analogausgabe ist.

4. Maschine nach einem der vorangehenden Ansprüche, **dadurch gekennzeichnet, dass** die Greifmitteln des Kopfes (2) geeignete rotierenden Spitzen (21) zum Eindringen in das Material der Blöcke umfassen.

5. Maschine nach einem der vorangehenden Ansprüche, **dadurch gekennzeichnet, dass** der Bearbeitungskopf (2) eine Kastenstruktur aufweist mit einem Vorderteil, an dem genannter optischer Sensor (20) gelagert ist und einer unteren Seite, an der die Greifmitteln (21) angebracht sind, wobei der Bearbeitungskopf (2) drei rotierenden Spitzen (21) umfasst, die an den oberen Enden eines Dreiecks an der unteren Seite des genannten Kopfes (2) angeordnet sind.

6. Maschine nach Anspruch 5, **dadurch gekennzeichnet, dass** der Bearbeitungskopf (2) Positionsgeber (25, 26) umfasst, die sich von der unteren Seite erstrecken, zum Ermitteln der senkrechten Annäherung an einen zu ergreifenden Materialblock, wobei die Greifmitteln (21) und die Positionsgeber (25) auf einer Platte (23) angebracht sind, wobei genannte Platte (23) senkrecht zur Struktur des Kopfes (2) mittels linearer Antriebe (24) bewegbar ist und wobei die Positionsgeber (25) aus zwei Luftzylindern bestehen; ein erster Annäherungssensor (27a) und ein zweiter Annäherungssensor (27b) sind auf jedem Luftzylinder angebracht; der zweite Annäherungssensor befindet sich in höherer Lage; die Ausgabe des ersten Sensors (27a) wird als Verzögerungssignal für den Kopf (2) verwendet und die Ausgabe des zweiten Sensors (27b) als Stoppsignal.

7. Maschine nach einem der vorangehenden Ansprüche, **dadurch gekennzeichnet, dass** sie ferner einen fotoelektrischen Sensor (32) mit senkrechtem Bereich umfasst, der sich an genannter Abladestation (5) befindet; genannter Sensor (32) liefert ein Signal zum Ermitteln der Ausrichtung bezüglich der Längs- und Querachsen (X, Y) des vom Bearbeitungskopfes (2) ergriffenen Blocks; das Kontrollsystem benutzt genanntes Signal, um bei Bedarf den Bearbeitungskopf (2) um die vertikale Achse (Z) zu rotieren, bevor der Befehl zur Freigabe des Greifmittels gegeben wird.

8. Maschine nach einem der vorangehenden Ansprüche, **dadurch gekennzeichnet, dass** der Ablauf des Programms dafür sorgt, dass die Maschine die maximale Höhenlage der Blöcke auf der Palette ermittelt und die Blöcke stufenweise nach waagerechten Reihen entsprechend der Längsachse (X) entladet, beginnend bei der maximalen Höhenlage und dann stufenweise bis zu den unteren Höhenlagen, wobei der Ablauf des genannten Programms bewirkt ist, dass die Maschine zum Ergreifen von jedem einzelnen Materialblock folgende Schritte vollführt:
a) Positionieren des Bearbeitungskopfes (2) ausgerichtet auf den Materialblock durch die Ermittlung des optischen Sensors (20),
b) Messen der Luftlinie zwischen dem Bearbeitungskopf (2) und dem genannten Block mittels des gleichen Sensors (20);
c) Anheben des Bearbeitungskopfes (2) und Positionieren des genannten Kopfes (2) direkt oberhalb des Blockes;
d) Senken des Kopfes (2) und Ergreifen des Blocks mittels der genannten Greifmitteln (21).

9. Maschine nach Anspruch 8, **dadurch gekennzeichnet, dass** der Block durch die Greifmitteln (21), die in das Material des Blocks eindringen, angehoben wird.

10. Maschine nach Anspruch 9, **dadurch gekennzeichnet, dass** genanntes automatisches Programm dafür sorgt, dass während des Ergreifens eines Blocks die Einsatzzeit und die Eindringtiefe der Greifmittel (21) in das Material des genannten Blocks gleichzeitig überprüft werden, um den Stillstand der Greifmitteln (21) anzuordnen.

## Revendications

1. Machine à dépalettiser pour des blocs palettisés de matériau brut, notamment de caoutchouc, ladite machine comprenant une station de chargement (4) prévue pour recevoir des palettes (P1, P2) et une station de déchargement (5) prévue pour recevoir les blocs individuels dépalettisés, où :
- la machine comprend une tête de collecte (2) couplée à un système de déplacement (1) agissant sur trois axes cartésiens longitudinal (X), transversal (Y) et vertical (Z), avec une rotation autour de l'axe vertical (Z), pour le déplacement de ladite tête de collecte (2) entre la station de chargement (4) et la station de déchargement (5) ;
- la tête de collecte (2) est dotée d'au moins un capteur optique (20), prévu pour détecter la présence d'un bloc de matériel face à ladite tête (2) et mesurer la distance entre la tête (2) et le bloc, et qui est également doté d'un dispositif de saisie (21) pour saisir lesdits blocs de matériau ;
- la machine comprend un système de commande électronique avec un programme de travail automatique, dont l'exécution fait que la machine analyse une palette située dans la station de chargement (4) en déplaçant la tête de collecte (2) face à la palette et détecte la disposition des blocs à l'aide dudit capteur optique (20), puis continue avec la saisie et le transport desdits blocs vers la station de déchargement (5) à l'aide de ladite tête de collecte (2), ledit système de déplacement (1) disposant d'une structure à pont roulant, **caractérisée par le fait que** ladite structure à pont roulant comprend des poutres longitudinales fixes (10) dotées de glissières horizontales (13) pour une glissière linéaire transversale (14); un chariot (15) pouvant coulisser sur ladite glissière linéaire (14) ; une glissière linéaire verticale (16), associée audit chariot (15) et pouvant se déplacer en direction verticale par rapport à celui-ci.

2. Machine selon la revendication 1, **caractérisée par le fait que** la tête de collecte (2) est montée sur l'extrémité inférieure de la glissière verticale (16), couplée à un actionneur pneumatique (17) permettant la rotation autour de l'axe vertical (Z).

3. Machine selon l'une des revendications précédentes, **caractérisée par le fait que** ledit capteur (20) est un capteur laser avec une double sortie numérique et analogique.

4. Machine selon l'une des revendications précédentes, **caractérisée par le fait que** le dispositif de saisie de la tête (2) comprend des pointes pivotantes (21) prévues pour pénétrer dans le matériau des blocs.

5. Machine selon l'une des revendications précédentes, **caractérisée par le fait que** la tête de collecte (2) possède une structure en boîtier, avec une partie avant sur laquelle est montée ledit capteur optique (20) et une face inférieure sur laquelle est monté le dispositif de saisie (21), ladite tête de collecte (2) comprenant trois pointes pivotantes (21) disposées sur les sommets d'un triangle, sur la face inférieure de ladite tête (2).

6. Machine selon la revendication 5, **caractérisée par le fait que** la tête de collecte (2) comprend des transducteurs de position (25, 26) qui s'étendent de la face inférieure, pour détecter l'approche verticale d'un bloc de matériau à prélever, ledit dispositif de saisie (21) et les transducteurs (25) étant montés sur une plaque (23) qui peut être déplacée verticalement par rapport à la structure de la tête (2) à l'aide d'actionneurs linéaires (24), lesdits transducteurs (25) étant composés de deux cylindres pneumatiques ; un premier capteur de proximité (27a) et un deuxième capteur de proximité (27b) sont montés sur chaque cylindre pneumatique ; le deuxième capteur de proximité est situé à une hauteur supérieure au premier ; la sortie du premier capteur (27a) est utilisée comme signal de ralentissement pour la tête (2) et la sortie du deuxième capteur (27b) possède un signal d'arrêt.

7. Machine selon l'une des revendications précédentes, **caractérisée par le fait qu'**elle comprend un capteur à photocellule (32) supplémentaire avec une plage verticale, situé dans ladite station de déchargement (5) ; ledit capteur (32) fournit un signal pour détecter l'orientation vis-à-vis des axes longitudinal et transversal (X, Y) du bloc saisie par la tête de collecte (2) ; le système de commande utilise ledit signal pour faire pivoter au besoin la tête de collecte (2) autour de l'axe vertical (Z) avant de commander la libération du dispositif de saisie.

8. Machine selon l'une des revendications précédentes, **caractérisée par le fait que** l'exécution dudit programme permet à la machine de détecter la hauteur maximum des blocs sur la palette et de décharger progressivement les blocs par rangées horizontales selon l'axe longitudinal (X), en partant de la hauteur maximum et en passant progressivement aux hauteurs inférieures. L'exécution dudit programme fait que la machine suit, pour saisir chaque bloc de matériau, les étapes ci-dessous :
a) positionnement de la tête de collecte (2) alignée sur le bloc de matériau à l'aide du dispositif de détection du capteur optique (20) ;
b) mesure de la distance linéaire entre la tête de collecte (2) et ledit bloc de matériau à l'aide de ce même capteur (20) ;
c) élévation de la tête de collecte (2) et positionnement de ladite tête (2) directement au-dessus du bloc ;
d) abaissement de la tête (2) et saisie du bloc à l'aide dudit dispositif de saisie (21).

9. Machine selon la revendication 8, **caractérisée par le fait que** le bloc est prélevé par le dispositif de saisie (21) en pénétrant dans le matériau du bloc.

10. Machine selon la revendication 9, **caractérisée par le fait que** ledit programme automatique fait que, lors de la saisie d'un bloc, le délai de fonctionnement et la profondeur de pénétration du dispositif de saisie (21) dans le matériau dudit bloc sont simultanément contrôlés pour commander l'arrêt du dispositif de saisie (21).
